(19) Europäisches Patentamt
European Patent Office
Office européen des brevets

(11) EP 4 796 293 A1

(12) EUROPEAN PATENT APPLICATION
published in accordance with Art. 153(4) EPC

(43) Date of publication:
**26.08.2026 Bulletin 2026/35**

(21) Application number: **24880135.9**

(22) Date of filing: **17.10.2024**

(51) International Patent Classification (IPC):
***B29C 64/165*** (2017.01) ***B29C 64/264*** (2017.01)
***B33Y 10/00*** (2015.01) ***B33Y 30/00*** (2015.01)
***B33Y 70/10*** (2020.01)

(52) Cooperative Patent Classification (CPC):
**B29C 64/165; B29C 64/264; B33Y 10/00; B33Y 30/00; B33Y 70/10**

(86) International application number:
**PCT/KR2024/015738**

(87) International publication number:
**WO 2025/084798 (24.04.2025 Gazette 2025/17)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **17.10.2023 KR 20230138879**
**16.10.2024 KR 20240141176**

(71) Applicant: **KOREA INSTITUTE OF MATERIALS SCIENCE**
**Gyeongsangnam-do 51508 (KR)**

(72) Inventors:
- **YUN, Hui-suk**
  **Changwon-si, Gyeongsangnam-do 51667 (KR)**
- **ABBAS, Shakeel**
  **Changwon-si, Gyeongsangnam-do 51508 (KR)**
- **CHOI, Yeong-jin**
  **Gimhae-si, Gyeongsangnam-do 51005 (KR)**
- **GAL, Chang-woo**
  **Changwon-si, Gyeongsangnam-do 51199 (KR)**

(74) Representative: **EP&C**
**P.O. Box 3241**
**2280 GE Rijswijk (NL)**

# (54) 3D PRINTING METHOD USING FLASH PHOTO-CURING

(57) The present invention relates to a 3D printing method using flashing photocuring, and more particularly, to a 3D printing method comprising: supplying a slurry for 3D printing comprising a photocurable resin and inorganic particles onto a plate of a 3D apparatus; photocuring the slurry onto the slurry supplied on the plate by irradiating light; and forming a 3D printed structure by repeatedly performing the supplying step and the photocuring step, wherein, in the photocuring step, light is irradiated in a flashing manner by repeatedly turning the light on and off.

Figure 14B

Slurry
T1
Flash time
T2
Off-time(t)
Tn
UV light
Flashing Illumination
Zirconia
Titania
Alumina

EP 4 796 293 A1

## Description

## BACKGROUND OF THE INVENTION

### 1. Field of the Invention

The present invention relates to a 3D printing method using flashing photocuring.

### 2. Description of the Related Art

3D printing is an additive manufacturing (AM) technology that fabricates complex three-dimensional shapes by stacking materials in a sequential manner, and research is being conducted to apply ceramic materials as well as polymer and metal materials to 3D printing.

3D printing technologies using ceramic materials are classified into slurry-based, powder-based, and bulk-solid-based methods depending on the preprocessed raw materials. Among these, slurry-based 3D printing, particularly digital light processing (DLP) technology, which selectively cures the surface of a slurry comprising photopolymerizable monomers and a photo-initiator using a light source of a specific wavelength (generally in the ultraviolet range), has attracted significant attention due to advantages such as smoother surface finish, improved precision, and increased printing speed.

Specifically, in the digital light processing (DLP) technology, when a photocurable resin comprising photopolymerizable monomers, oligomers, and a photo-initiator is coated on a plate and exposed to ultraviolet (UV) light, the surface of the slurry is cured through a free-radical photopolymerization process that can be divided into three stages: initiation, propagation, and termination.

In order to obtain a printable curing depth through the photopolymerization process, appropriate light energy determined by the light exposure time and the light intensity of the UV source should be supplied. However, in the case of a suspension comprising ceramic particles in the photocurable resin, the ceramic particles absorb or scatter a portion of the UV light, and such scattering not only induces radical formation and propagation within an intended exposure region but also extends to undesired regions of the suspension, thereby causing overcuring in unintended regions and consequently reducing fidelity and structural accuracy of the printed part.

Such overcuring caused by scattering (geometric overgrowth) is considered to depend on the intensity of the light source and optical properties of the ceramic slurry. Accordingly, while light exposure with low energy fails to polymerize the material, excessively high energy promotes overcuring due to scattering, and thus it is important to set an appropriate amount of light exposure. In addition, slurries comprising particles having a relatively high refractive index, a relatively high particle content, or irregularly shaped particles exhibit a small curing depth, thereby requiring a longer light exposure time. However, as the light exposure time increases, overcuring (geometric overgrowth) due to scattering is induced, and thus it is known that using materials having particles with a low refractive index and uniformly distributed spherical shapes is advantageous for improving printing precision.

Meanwhile, numerous techniques have been explored and implemented to solve the overcuring problem caused by scattering in suspensions comprising ceramic particles.

In this regard, since light intensity is directly related to overgrowth, one approach to improving printing accuracy is to cure a photocurable resin using a low-intensity printer or to reduce the UV exposure time (curing time) of the ceramic slurry (Yun, Y., et al., Mechanism of ceramic slurry light scattering affecting contour accuracy and method of projection plane correction. Ceramics International, 2023. 49(10): p. 15024-15033.). However, this approach is applicable only when the slurry material already has high curability, and thus may be difficult to apply when ceramic particles having high absorbance or a high refractive index are included.

In addition, a method of including a light inhibitor in a photocurable resin to achieve high printing resolution has been reported (Sutejo, I.A., et al., Fabrication of color-graded feldspathic dental prosthetics for aesthetic and restorative dentistry. Dental Materials, 2023. 39(6): p. 568-576.). However, this approach has also been reported to be effective only for ceramic slurries having high curability or for initially optically transparent non-ceramic photocurable resins.

The present inventors, while conducting research on a method for improving structural accuracy by solving the problem that slurries comprising particles having a relatively high refractive index, a relatively high content, or irregular shapes require a longer light exposure time due to relatively small curing depth (i.e., Z-axis curability), while overcuring occurs due to high scattering caused by the long light exposure time, have found that, by irradiating light in a flashing manner by repeatedly turning the light on and off during photocuring, the accuracy of a 3D printed structure can be significantly improved, thereby completing the present invention.

## SUMMARY OF THE INVENTION

An object of the present invention in one aspect is to provide a 3D printing method using flashing photocuring, and more particularly, to provide a 3D printing method capable of obtaining a robust three-dimensional structure by inducing sufficient interlayer bonding while preventing overcuring.

To achieve the above object,

in one aspect, there is provided a 3D printing method using flashing photocuring, comprising:

supplying a slurry for 3D printing comprising a photocurable resin and inorganic particles onto a plate of a 3D apparatus;
photocuring the slurry by irradiating light onto the slurry for 3D printing supplied on the plate; and
forming a 3D printed structure by repeatedly performing the supplying step and the photocuring step,
wherein, in the photocuring step, light is irradiated in a flashing manner by repeatedly turning the light on and off.

In this case, in the photocuring step, the light may be irradiated in a flashing manner by repeatedly turning the light on for 0.1 to 1 second and turning the light off for 0.5 seconds or more.

In the photocuring step, preferably, a turning-off time may be 1 second or more, and more preferably, the turning-off time may be 1 second or more and a turning-on time may be 0.1 to 0.5 seconds.

In addition, a total curing time in the photocuring step may be 1 second to 60 seconds.

In addition, a curing depth in the photocuring step may be 10 μm or more.

In addition, the slurry for 3D printing may comprise inorganic particles in an amount of 30 vol% or more.

In addition, the slurry for 3D printing may further comprise a photo-initiator and a dispersant.

The inorganic particles may be at least one of ceramic particles and metal particles.

The slurry for 3D printing may comprise particles of at least one of zirconia ($ZrO_2$) and titania ($TiO_2$) in an amount of 40 to 50 vol%.

The slurry for 3D printing may comprise alumina ($Al_2O_3$) particles in an amount of 50 to 60 vol%.

The 3D printing method may further comprise:

debinding the 3D printed structure; and
sintering the debound structure.

## ADVANTAGEOUS EFFECT

The 3D printing method using flashing photocuring according to the present invention is a photocuringbased 3D printing method using a slurry comprising inorganic particles, and can improve structural accuracy and shape fidelity by suppressing overcuring caused by scattering of the particles in the photocuring step.

In particular, when the inorganic particles have a relatively high refractive index or are present in a relatively high content, overcuring due to scattering can be effectively suppressed, thereby significantly improving structural accuracy and shape fidelity.

In addition, the 3D printing method of the present invention has an advantage in that a ceramic structure, produced by debinding and sintering the 3D printed structure, can be manufactured with high structural accuracy and shape fidelity.

The effects of the present invention are not limited to those described above, and other effects not mentioned herein will be clearly understood by those skilled in the art from the following description.

## BRIEF DESCRIPTION OF THE DRAWINGS

FIG. 1A is a schematic diagram illustrating a 3D printing method for evaluating structural accuracy according to an embodiment.
FIG. 1B is a schematic diagram illustrating a 3D printing apparatus according to an embodiment.
FIG. 1C illustrates a 3D model shape used to evaluate structural accuracy according to an embodiment.
FIGS. 2A to 2D are images and graphs of geometric overgrowth of zirconia single printed layers manufactured using a slurry for 3D printing comprising 40, 43, 45, or 47 vol% of zirconia, respectively, by applying a flashing photocuring method with varying turning-on time (Flash Time), and by applying a continuous photocuring method.
FIGS. 3A to 3D are images and geometric overgrowth results of titania single printed layers of examples manufactured using a slurry for 3D printing comprising 40, 43, 45, or 47 vol% of titania, respectively, by applying a flashing

photocuring method with varying turning-on time (Flash Time), and of comparative examples manufactured using a continuous photocuring method.

FIGS. 4A to 4E are images of alumina single printed layers of examples manufactured using a slurry for 3D printing comprising 40, 43, 45, 47, 50, or 52 vol% of titania, respectively, by applying a flashing photocuring method with varying turning-on time (Flash Time), and of comparative examples manufactured using a continuous photocuring method.

FIG. 5 is a graph showing absorbance of zirconia, titania, and alumina.

FIG. 6A is a single printed layer image of zirconia of an example manufactured using a flashing photocuring method with different off times in the total curing time, FIG. 6B is a graph of geometric overgrowth rate with respect to the total curing time, and FIG. 6C is a graph of the curing depth with respect to the total curing time.

FIG. 7A is a single printed layer image of titania of an example manufactured using a flashing photocuring method with different off times in the total curing time, FIG. 7B is a graph of geometric overgrowth rate with respect to the total curing time, and FIG. 7C is a graph of the curing depth with respect to the total curing time.

FIG. 8A a single printed layer image of alumina of an example manufactured using a flashing photocuring method with different off times in the total curing time, FIG. 8B is a graph of geometric overgrowth with respect to the total curing time, and FIG. 8C is a graph of curing depth with respect to the total curing time.

FIG. 9 shows images of zirconia and titania 3D printed structures (green bodies) manufactured according to examples and comparative examples.

FIG. 10 shows images of zirconia and titania debound structures (brown bodies) manufactured according to examples and comparative examples.

FIG. 11 shows images of zirconia and titania sintered structures (sintered bodies) manufactured according to examples and comparative examples.

FIG. 12 shows images of alumina 3D printed structures (green bodies) manufactured according to examples and comparative examples.

FIG. 13 shows images of alumina debound structures (brown bodies) and sintered structures (sintered bodies) manufactured according to examples and comparative examples.

FIG. 14A illustrates sintered structures of zirconia, titania, and alumina manufactured according to comparative examples, and FIG. 14B illustrates sintered structures of zirconia, titania, and alumina manufactured according to examples.

FIG. 15 is a graph showing flexural strength of zirconia manufactured according to examples and comparative examples.

FIG. 16 is a graph showing flexural strength of titania manufactured according to examples and comparative examples.

## DESCRIPTION OF THE PREFERRED EMBODIMENTS

Hereinafter, the preferable embodiments of the present invention are described with reference to the accompanying drawings. However, the embodiments of the present invention can be modified and altered in various ways and the scope of the present invention is not limited to the embodiments described below. It is well understood by those in the art who has the average knowledge on this field that the embodiments of the present invention are given to explain the present invention more precisely. Therefore, the shape and size of the elements in the drawings may be exaggerated for clarity of description and the elements indicated by the same reference in the drawings are the same elements. In addition, throughout the specification, when a component is described as "comprising " a certain element, it means that other elements may be further included, unless otherwise specifically stated, rather than excluding other elements.

In one aspect, the present invention provides a 3D printing method using flashing photocuring, comprising:

supplying a slurry for 3D printing comprising a photocurable resin and inorganic particles onto a plate of a 3D apparatus;
photocuring the slurry onto the slurry supplied on the plate by irradiating light; and
forming a 3D printed structure by repeatedly performing the supplying step and the photocuring step,
wherein, in the photocuring step, light is irradiated in a flashing manner by repeatedly turning the light on and off.

Hereinafter, the 3D printing method according to an embodiment will be described in detail for each step.

The 3D printing method according to an embodiment is a 3D printing method using flashing photocuring.

Here, flashing photocuring means irradiating light in a flashing manner by repeatedly turning the light on and off to photopolymerize a photocurable resin in the slurry for 3D printing.

In contrast to the flashing photocuring, a conventional method of continuously irradiating light to photopolymerize the photocurable resin in the slurry for 3D printing is referred to as continuous photocuring.

The 3D printing method according to an embodiment comprises supplying a slurry for 3D printing comprising a photocurable resin and inorganic particles onto a plate of a 3D apparatus.

Here, the photocurable resin is used to allow the slurry for 3D printing to be cured by light such as ultraviolet (UV) light.

The photocurable resin may comprise an acrylatebased monomer or oligomer having two or more functional groups, and may comprise, for example, at least one selected from the group consisting of 1,6-hexanediol diacrylate (HDDA), triethylene glycol dimethacrylate (TMPTA), trimethylolpropane triacrylate (TMPTA), urethane dimethacrylate (UDMA), and polypropylene glycol diacrylate (PPGDA), but is not limited thereto.

The slurry for 3D printing may comprise the inorganic particles in an amount of preferably 30 vol% or more, more preferably 30 vol% to 70 vol%, 35 vol% to 60 vol%, or 40 vol% to 55 vol%, based on the total volume of the slurry.

This may be to ensure that the slurry for 3D printing comprising the photocurable resin has a shear rate-dependent viscosity suitable for forming a normal film shape when applied in a film form. If the slurry for 3D printing is not applied in a normal film shape, a single printed layer (1 layer) for 3D printing may not be properly formed.

For example, the slurry for 3D printing may comprise particles of at least one of zirconia ($Zr O_2$) and titania ($TiO_2$) in an amount of 40 to 50 vol%, and may comprise alumina ($Al_2O_3$) particles in an amount of 40 to 60 vol%.

If the particles in the slurry for 3D printing comprising the photocurable resin are contained in an amount less than the minimum range, the shear rate-dependent viscosity of the slurry may be too low, and a plurality of puddles may be formed in the slurry in a film form due to the high surface tension of the resin in the slurry, thereby failing to form a normal film shape. On the other hand, if the particles are contained in an amount exceeding the maximum range, the shear rate-dependent viscosity of the slurry may be too high, thereby causing a problem in that the slurry cannot be applied in a film form.

Here, the inorganic particles may be metal particles or ceramic particles, preferably ceramic particles, and may at least one of zirconia ($ZrO_2$), titania ($TiO_2$), and alumina ($Al_2O_3$).

The 3D printing method according to an embodiment may be more effectively applied when a slurry comprising ceramic particles having a relatively high refractive index, such as zirconia ($ZrO_2$) and titania ($TiO_2$), which exhibit low curability due to scattering, is used.

In addition, the 3D printing method according to an embodiment may be more effectively applied when a slurry is used that comprises particles such as alumina ($Al_2O_3$), which has excellent curability but is included in a high content (for improving density or mechanical properties).

Accordingly, the slurry may comprise inorganic particles having a refractive index of 2 or more, or may comprise inorganic particles in a high content of 50 vol% or more.

For example, the slurry for 3D printing may comprise particles of at least one of zirconia ($ZrO_2$) and titania ($TiO_2$) in an amount of 40 to 50 vol%, and may comprise alumina ($Al_2O_3$) particles in an amount of 50 to 60 vol%, or 50 to 55 vol%.

The slurry for 3D printing may further comprise a photo-initiator.

The photo-initiator may be a conventional photocuring initiator used in 3D printing. For example, bis(2,4,6-trimethylbenzoyl)-phenylphosphine oxide (Irgacure 819) (BASF, Germany) may be used.

The slurry for 3D printing may comprise the photo-initiator in an amount of 0.02 wt% to 1 wt% based on the total weight of the slurry, although the content of the photo-initiator may vary depending on the wavelength and intensity of light.

In addition, the slurry for 3D printing may further comprise a dispersant.

The dispersant may be used to control the shear rate-dependent viscosity of the slurry and to improve dispersibility of powder.

The dispersant may comprise at least one selected from the group consisting of CC-9, KD-4, BYK-111, BYK-163, BYK-180, BYK-2001, BYK-2013, and Anti-Terra-U.

The slurry for 3D printing may comprise the dispersant in an amount of 0.5 wt% to 10 wt% based on the total weight of the slurry, although the content of the dispersant may vary depending on the type and content of the inorganic particles comprised in the slurry.

The slurry for 3D printing is supplied onto a plate of a 3D apparatus.

In this case, the 3D apparatus may preferably be a digital light processing (DLP) apparatus.

The slurry for 3D printing may be supplied so as to be applied in a film form on a plate of a 3D apparatus (or a printing bed), and may be formed into a thin layer using, for example, a doctor blade, but is not limited thereto, and other components capable of applying the slurry in a film form may be used.

The 3D printing method according to an embodiment comprises photocuring the slurry for 3D printing supplied on the plate by irradiating light.

This step is a step of forming a single printed layer.

In the photocuring step, the light may be ultraviolet (UV) light having a wavelength of 300 nm to 465 nm.

The 3D printing method according to an embodiment is a 3D printing method using flashing photocuring, and the photocuring step is characterized in that light is irradiated in a flashing manner by repeatedly turning the light on and off.

In the 3D printing method according to an embodiment, a total curing time is defined by the following Equation 1:

Total curing time (flashing method) = turning-on time (flash time) × number of curing cycles <Equation 1>

Here, the turning-on time (flash time) means a time during which light is irradiated onto the slurry, and the turning-off time (off time) means a time during which light is not irradiated.

As the total curing time increases, the curing depth increases, and thus the total curing time may vary depending on a required curing depth.

Here, the curing depth is for forming a single printed layer, and it is preferable that the curing depth is about 2 to 3 times a thickness of the single printed layer to be formed. Considering currently available apparatus, the curing depth is preferably 10 μm or more.

In the 3D printing method according to an embodiment, the total curing time may be 1 second or more, 1.5 seconds or more, or 2 seconds or more, and 60 seconds or less, 50 seconds or less, 40 seconds or less, 30 seconds or less, 20 seconds or less, 10 seconds or less, 9 seconds or less, 8 seconds or less, 7 seconds or less, 6 seconds or less, 5 seconds or less, 4 seconds or less, 3 seconds or less, or 2 seconds or less.

In the photocuring step, the light may be irradiated in a flashing manner by repeatedly turning the light on for 0.1 to 1 second and turning the light off for 0.5 seconds or more.

In the 3D printing method according to an embodiment, overcuring can be controlled by adjusting the flash time, and more specifically, as the turning-on time (flash time) is decreased within a range of 0.1 to 1 second, an effect of suppressing overcuring can be further improved.

Here, the turning-on time (flash time) may be preferably 0.1 seconds or more and 0.7 seconds or less, 0.5 seconds or less, 0.3 seconds or less, or 0.2 seconds or less, and may be 0.1 to 0.5 seconds.

As the turning-on time (flash time) decreases, the curing depth decreases. Therefore, when the flash time is less than 0.1 seconds, there may occur a problem in that an excessive total curing time is required to reach a required curing depth, or the required curing depth may not be achieved.

In addition, when the turning-on time (flash time) exceeds 1 second, an effect of reducing overcuring (or geometric overgrowth) by using the flashing method may be insignificant.

In addition, the 3D printing method according to an embodiment can control overcuring by adjusting the turning-off time (off time), and more specifically, overcuring can be suppressed by having an off time of 0.5 seconds or more, and the effect of suppressing overcuring can be further improved by increasing the off time.

Here, turning-off time (off time) may be 0.5 seconds or more, 1 second or more, 2 seconds or more, 3 seconds or more, 4 seconds or more, or 5 seconds or more, and 10 seconds or less, preferably less than 10 seconds.

If the turning-off time (off time) is less than 0.5 seconds, the effect of reducing overcuring (or geometric overgrowth) by using the flashing method may be insignificant.

In addition, as the turning-off time (off time) increases, the curing depth decreases. Therefore, when the turning-off time (off time) is 10 seconds or more, there may occur a problem in that an excessive total curing time is required to reach a required curing depth, or the required curing depth may not be achieved.

In the 3D printing method according to an embodiment, by adjusting the turning-off time (off time) together with the turning-on time (flash time) as described above, overcuring caused by scattering of inorganic particles can be significantly reduced, and thus structural accuracy and shape fidelity of a 3D printed structure to be manufactured can be remarkably improved.

The 3D printing method according to an embodiment comprises forming a 3D printed structure by repeatedly performing the supplying step and the photocuring step.

The 3D printing method according to an embodiment may form a first printed layer using a predetermined 3D model by the above-described method, and then form a second printed layer on the first printed layer by supplying the slurry and performing photocuring by the above-described method, and may form a 3D printed structure by repeatedly performing the slurry supplying and photocuring.

The 3D printing method according to an embodiment is a ceramic 3D printing method comprising ceramic particles as inorganic particles, and may further comprise:

debinding the 3D printed structure; and
sintering the debound structure.

Here, the debinding is a step of removing organic components such as the photocurable resin and the dispersant contained in the 3D printed structure, and may be performed within an appropriate temperature range at which such organic components can be removed. The debinding may be preferably performed at room temperature or at a temperature in a range of 25°C to 700°C under a nitrogen atmosphere.

In addition, the sintering is a step of densifying the structure to form a final ceramic structure, and may be performed in an air atmosphere at a temperature of 1100°C to 1700°C, although the sintering temperature may vary

depending on a type of ceramic particles comprised therein.

Hereinafter, the present invention will be described in detail by the following examples and experimental examples.

However, the following examples and experimental examples are only for illustrating the present invention, and the contents of the present invention are not limited thereto.

<Preparative Example 1> Preparation of Slurry for 3D Printing

A photocurable resin was prepared by adding trimethylolpropane triacrylate (TMPTA) and 1,6-hexanediol diacrylate (HDDA) at a weight ratio of 3:17.

A non-reactive diluent, polypropylene glycol (PPG P400) (Sigma-Aldrich, USA), was added in an amount of 25% based on the total resin, and a photo-initiator, bis(2,4,6-trimethylbenzoyl)-phenylphosphine oxide (Irgacure 819) (BASF, Germany), was added in an amount of 0.4% based on the total resin. All components were uniformly mixed for 5 minutes at 2000 rpm using a planetary centrifugal mixer (ARE-310, THINKY, USA). Thereafter, ceramic powder was added, and a dispersant, DISPERBYK-111 (BYK-111; Altana AG, Germany), was added in an amount of 2 wt% based on the slurry, followed by further mixing for about 10 minutes.

At this time, the type and content of the ceramic powder were used as shown in Table 1 below.

[Table 1]

| | ceramic powder | contents |
|---|---|---|
| Preparative Example 1 | Zirconia ($ZrO_2$) | 40 |
| Preparative Example 2 | Zirconia ($ZrO_2$) | 43 |
| Preparative Example 3 | Zirconia ($ZrO_2$) | 45 |
| Preparative Example 4 | Zirconia ($ZrO_2$) | 47 |
| Preparative Example 5 | Titania ($TiO_2$) | 40 |
| Preparative Example 6 | 티타니아 ($TiO_2$) | 43 |
| Preparative Example 7 | Titania ($TiO_2$) | 45 |
| Preparative Example 8 | Titania ($TiO_2$) | 47 |
| Preparative Example 9 | Alumina ($Al_2O_3$) | 40 |
| Preparative Example 10 | Alumina ($Al_2O_3$) | 43 |
| Preparative Example 11 | Alumina ($Al_2O_3$) | 45 |
| Preparative Example 12 | Alumina ($Al_2O_3$) | 47 |
| Preparative Example 13 | Alumina ($Al_2O_3$) | 50 |
| Preparative Example 14 | Alumina ($Al_2O_3$) | 52 |

- Content: volume percentage based on the total volume of the slurry
- Zirconia ($ZrO_2$): 3 mol% yttria-stabilized zirconia (CY3Z, Zirpro Saint-Gobain, France), density 5.68 g/cm$^3$, refractive index 2.2
- Titania ($TiO_2$): Titania (KRONOS 1002, KRONOS®, USA), density 4.26 g/cm$^3$, refractive index 2.9
- Alumina ($Al_2O_3$): Alumina (AKP-20, Kojundo Chemical Laboratory, Japan), density 4.00 g/cm$^3$, refractive index 1.6

<Example 1-1>

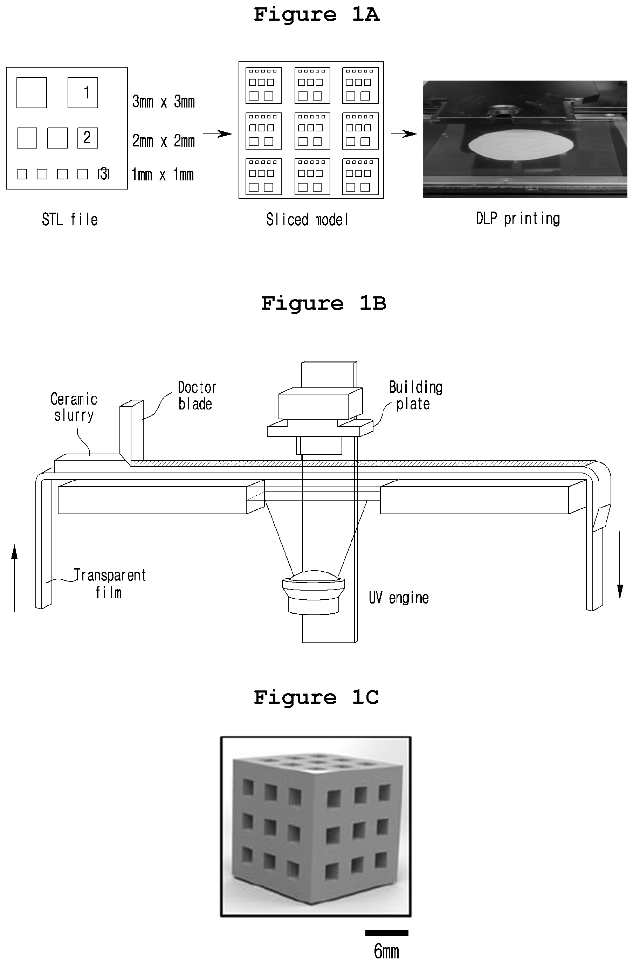

A single printed layer of a 3D printed structure was prepared by the following method (see FIGS. 1A to 1C, wherein FIG. 1A is a schematic diagram illustrating a 3D printing method for evaluating structural accuracy according to an example, FIG. 1B is a schematic diagram illustrating a 3D printing apparatus according to an example, and FIG. 1C illustrates a 3D model shape used to evaluate structural accuracy according to an example):
A three-dimensional (3D) model of a window structure with three different square pores of 3 × 3 mm, 2 × 2 mm, and 1 × 1 mm (see FIG. 1C) was sliced and loaded into a continuous film-type digital light processing (DLP) printer operating at a UV wavelength of 405 nm and an intensity of 30 mW/cm$^2$.

The slurry for 3D printing was applied onto a transparent plate using a doctor blade, and then UV light was

irradiated using flashing illumination by repeatedly turning the light on for 0.2 seconds and turning the light off for 0.5 seconds, thereby preparing a zirconia ($ZrO_2$) single printed layer.

In this case, as the slurry, slurries of Preparative Examples 1 to 4 ($ZrO_2$, 40, 43, 45, and 47 vol%) were used, and single printed layers were prepared while varying the total curing time to 2 seconds, 4 seconds, 6 seconds, 8 seconds, and 10 seconds.

Here, the total curing time is defined as a product of the turning-on time (flash time) and the number of curing cycles. A total curing time of 2 seconds corresponds to repeating flashing of 0.2 seconds on-time and 0.5 seconds off-time for 10 cycles, and each increase of 2 seconds in the total curing time corresponds to additionally repeating the flashing for 10 cycles.

<Example 1-2>

A zirconia ($ZrO_2$) single printed layer was prepared in the same manner as in Example 1-1, except that the turning-on time (flash time) was changed to 0.5 seconds.

<Example 1-3>

A zirconia ($ZrO_2$) single printed layer was prepared in the same manner as in Example 1-1, except that the turning-on time (flash time) was changed to 1 second.

<Example 1-4>

A zirconia ($ZrO_2$) single printed layer was prepared in the same manner as in Example 1-1, except that the turning-off time (off time) was changed to 1 second.

<Example 1-5>

A zirconia ($ZrO_2$) single printed layer was prepared in the same manner as in Example 1-1, except that the turning-off time (off time) was changed to 3 seconds.

<Example 1-6>

A zirconia ($ZrO_2$) single printed layer was prepared in the same manner as in Example 1-1, except that the turning-off time (off time) was changed to 5 seconds.

<Example 1-7>

A zirconia ($ZrO_2$) single printed layer was prepared in the same manner as in Example 1-1, except that the turning-off time (off time) was changed to 10 seconds.

<Example 1-8>

A zirconia ($ZrO_2$) single printed layer was prepared in the same manner as in Example 1-1, except that the turning-off time (off time) was changed to 20 seconds.

<Example 1-9>

A zirconia ($ZrO_2$) single printed layer was prepared in the same manner as in Example 1-1, except that the turning-off time (off time) was changed to 30 seconds.

<Example 2-1 to 2-3>

Titania ($TiO_2$) single printed layers were prepared by performing the same method as in Examples 1-1 to 1-3, except that the slurry was changed to the slurries of Preparative Examples 5 to 8 ($TiO_2$, 40, 43, 45, and 47 vol%).

<Example 2-4 to 2-9>

Titania ($TiO_2$) single printed layers were prepared by performing the same method as in Examples 1-4 to 1-9,

except that the slurry of Preparative Examples 5 to 8 ($TiO_2$, 40, 43, 45, and 47 vol%) was used and the turning-on time (flash time) was changed to 0.5 seconds.

<Example 3-1 to 3-6>

Alumina ($Al_2O_3$) single printed layers were prepared by performing the same method as in Examples 1-1 to 1-9, except that the slurry was changed to the slurries of Preparative Examples 9 to 14 ($Al_2O_3$, 40, 43, 45, 47, 50, and 52 vol%), and the total curing time was varied to 1 second, 2 seconds, 4 seconds, 6 seconds, 8 seconds, and 10 seconds.

<Example 4-1>

A ceramic structure was formed by the following 3D printing method using flashing photocuring.

Step 1: A three-dimensional (3D) model of a window structure having pores of 3 × 3 mm was sliced and loaded into a continuous film-type digital light processing (DLP) printer operating at a UV wavelength of 405 nm and an intensity of 30 $mW/cm^2$. The slurry for 3D printing was applied onto a transparent plate using a doctor blade, and UV light was irradiated using flashing illumination by repeatedly turning the light on for 0.2 seconds and turning the light off for 1 second, thereby preparing a single printed layer.

In this case, the slurry of Preparative Example 3 ($ZrO_2$, 45 vol%) was used, and a single printed layer having a thickness of 25 μm was prepared with a total curing time of 2 seconds.

Step 2: The above-described method for forming a single printed layer was repeatedly performed to form a zirconia ($ZrO_2$) 3D printed structure (green body) having a lattice structure with square pores.

Step 3: The 3D printed structure (green body) prepared in Step 2 was debound at up to 600°C under nitrogen ($N_2$) to safely remove resin components without causing structural defects. Thereafter, the debound structure (brown body) was sintered at 1500°C in air to form a zirconia ($ZrO_2$) ceramic structure.

<Example 4-2>

A titania ($TiO_2$) ceramic structure was formed by performing the same method as in Example 4-1, except that the slurry of Preparative Example 7 ($TiO_2$, 45 vol%) was used, flashing was performed by repeatedly turning the light on for 0.5 seconds and off for 1 second, a single printed layer having a thickness of 15 μm was prepared with a total curing time of 4 seconds, and sintering was performed at 1200°C.

<Example 4-3>

A titania ($TiO_2$) ceramic structure was formed by performing the same method as in Example 4-1, except that the slurry of Preparative Example 14 ($Al_2O_3$, 52 vol%) was used, flashing was performed by repeatedly turning the light on for 0.2 seconds and off for 1 second, a single printed layer having a thickness of 40 μm was prepared with a total curing time of 1 second, and sintering was performed at 1600°C.

<Comparative Example 1>

A zirconia ($ZrO_2$) single printed layer was prepared by performing the same method as in Example 1-1, except that, during photocuring, continuous illumination was used to irradiate light continuously without turning off the light (no flash).

<Comparative Example 2>

A titania ($TiO_2$) single printed layer was prepared by performing the same method as in Example 2-1, except that, during photocuring, continuous illumination was used to irradiate light continuously without turning off the light (no flash).

<Comparative Example 3>

An alumina ($Al_2O_3$) single printed layer was prepared by performing the same method as in Example 3-1, except that, during photocuring, continuous illumination was used to irradiate light continuously without turning off the light (no flash).

<Comparative Example 4-1 to 4-3>

Alumina ($Al_2O_3$) single printed layers were prepared by performing the same method as in Examples 4-1 to 4-3, except that, during photocuring, continuous illumination was used to irradiate light continuously without turning off the light (no flash).

<Experimental Example>

In order to compare structural accuracy of single printed layers according to flashing illumination and continuous illumination, the single printed layers formed in Examples 1-1 to 1-4, 2-1 to 2-4, and 3-1 to 3-6 were washed with 1,6-hexanediol diacrylate (HDDA), and curing depth was measured using a micrometer (High-Accuracy Digimatic® Digital Micrometer, Mitutoyo, Kawasaki, Japan). Images of the printed layers were captured using a mobile camera (iPhone 13 Pro Max, ultra-wide camera, 13 mm, f1.8, 3 MP), and overcuring width was measured using ImageJ software. Based on this, geometric overgrowth (%) was calculated using Equation 2:

<Equation 2>

$$\text{Geometric overgrowth (\%)} = \left(\frac{\text{Cured width}}{\text{Actual width of the 3D model}} - 1\right) \times 100$$

<Experimental Example 1> Evaluation of Structural Accuracy of Single Printed Layer According to Flash Time

(1) Zirconia ($ZrO_2$) Single Printed Layer

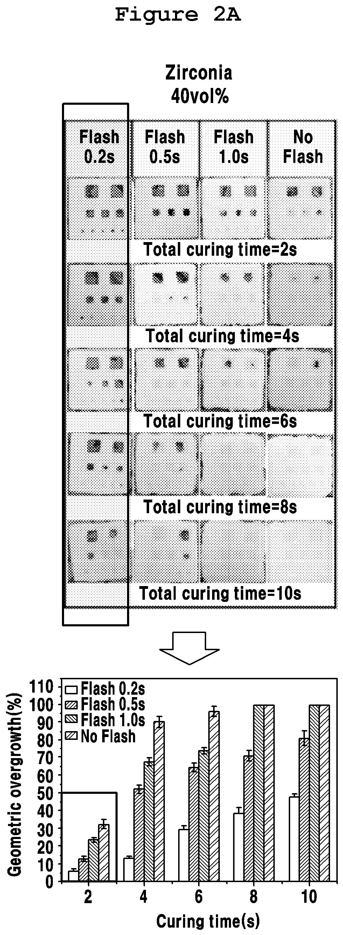

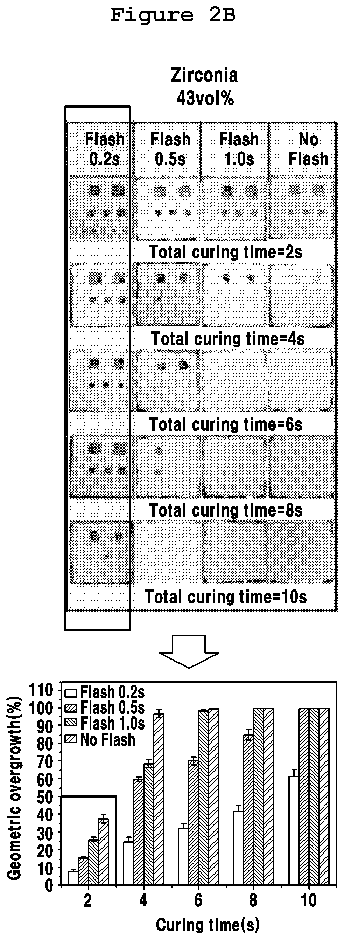

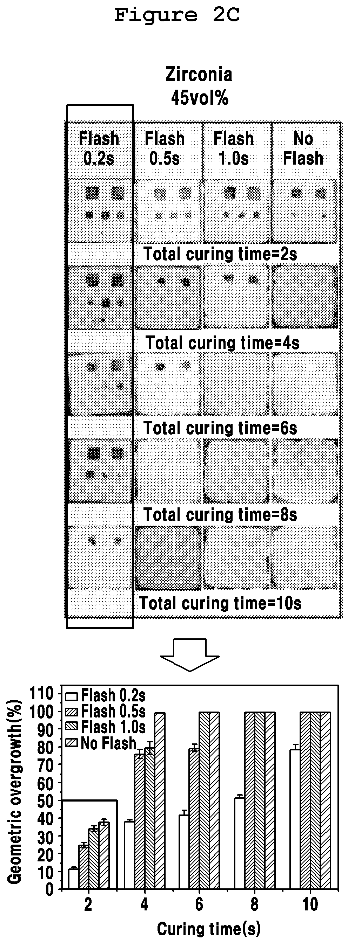

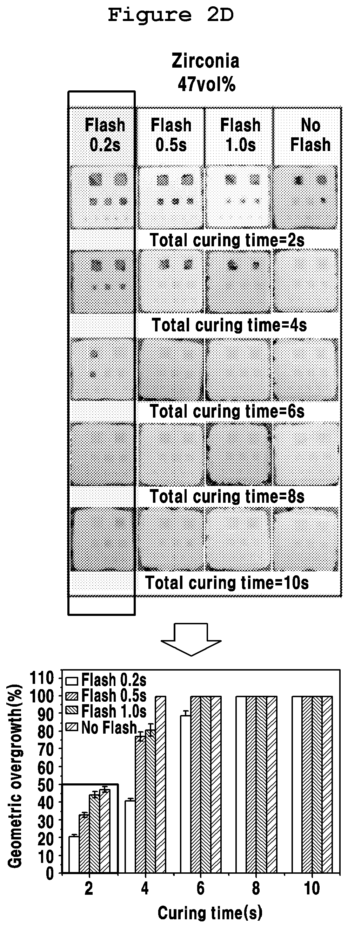

In order to confirm differences in structural accuracy according to flashing illumination and continuous illumination, and differences according to flash time, process conditions for Examples 1-1 to 1-3 and Comparative Example 1 are shown in Table 2 below, and images of printed layers and geometric overgrowth are shown in FIGS. 2A to 2D. Figures 2A to 2D are images and graphs of geometric overgrowth rates of zirconia single printed layers of Examples prepared using a flashing Photocuring manner with varying flash times and of those using a continuous photocuring manner, wherein the single prepared printed layers were prepared using slurries for 3D printing comprising zirconia in an amount of 40, 43, 45, or 47 vol%, respectively.

[Table 2]

| | Slurry | Flash time (s) | off time (s) | Total Curing Time (s) |
|---|---|---|---|---|
| Comparative Example 1 | Preparative Example 1-4 ($ZrO_2$, 40, 43, 45, 47vol%) | No Flash | | 2, 4, 6, 8, 10 |
| Example 1-1 | Preparative Example 1-4 ($ZrO_2$, 40, 43, 45, 47vol%) | 0.2 | 0.5 | |
| Example 1-2 | Preparative Example 1-4 ($ZrO_2$, 40, 43, 45, 47vol%) | 0.5 | | |
| Example 1-3 | Preparative Example 1-4 ($ZrO_2$, 40, 43, 45, 47vol%) | 1.0 | | |

As shown in FIGS. 2A to 2D, overcuring increased as total curing time increased from 2 seconds to 10 seconds, and overcuring also increased as zirconia content increased from 40 vol% to 47 vol%.

In Comparative Example 1 using continuous illumination (no flash), a high rate of overcuring was observed even at relatively low curing time due to UV scattering. In contrast, in Examples 1-1 to 1-3 using flashing illumination, overcuring of the ceramic structure was significantly improved at all total curing times, resulting in improved structural accuracy. In addition, when comparing flash time, structural accuracy was improved at 0.2 to 0.5 seconds compared to 1 second, regardless of powder content.

Furthermore, when the total curing time exceeded 2 seconds, in Comparative Example 1 using continuous illumination, the porous structure was completely overcured due to extensive scattering, such that square pores of the slurry were hardly visible. In contrast, in Example 1-1 using a flashing method with a flash time of 0.2 seconds, structural accuracy was maintained at a high level, confirming that overcuring was effectively suppressed.

In addition, from the graph of geometric overgrowth according to total curing time, it was confirmed that geometric overgrowth was significantly suppressed in the flashing illumination method compared to the continuous illumination

method.

In particular, under conditions of 40 vol% slurry and 2 seconds curing time, overcuring of 30% or more was observed in the continuous illumination method, whereas in the flashing illumination method with a flash time of 0.2 seconds, it was significantly reduced to less than 7%.

From these results, it can be confirmed that, when forming a 3D printed structure by a photocuring method, the flashing illumination method significantly suppresses overcuring compared to the continuous illumination method, thereby improving structural accuracy. In addition, it can be confirmed that lower flash time, specifically 1 second or less, more specifically 0.2 to 0.5 seconds, further improves structural accuracy.

(2) Titania ($TiO_2$) Single Printed Layer

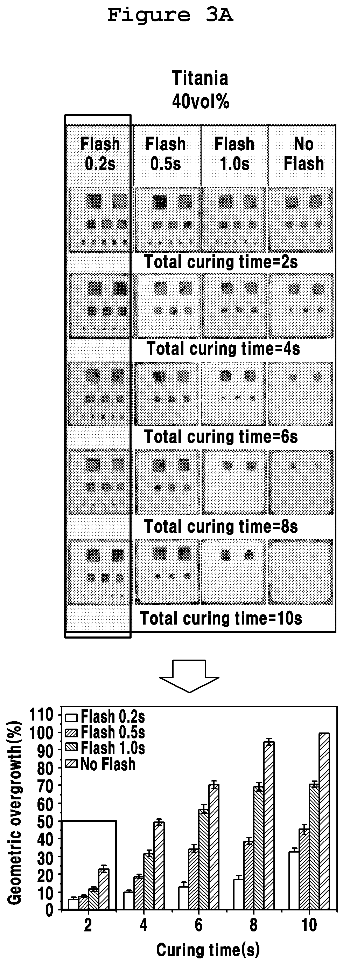

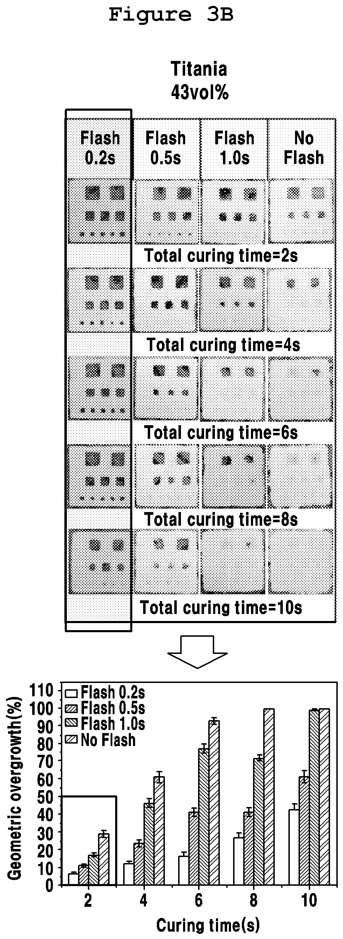

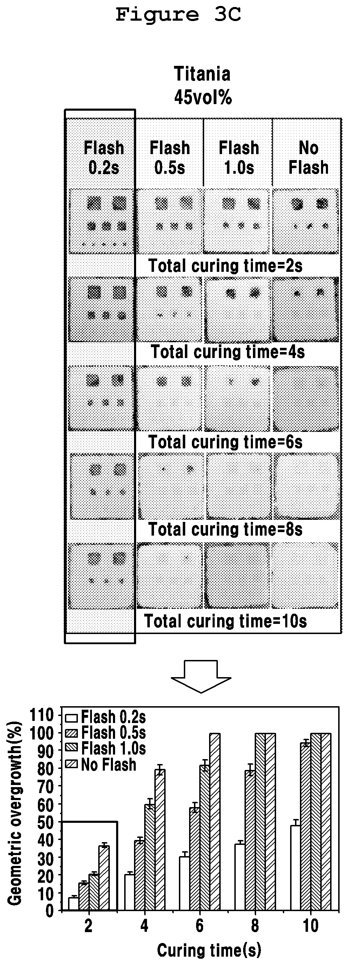

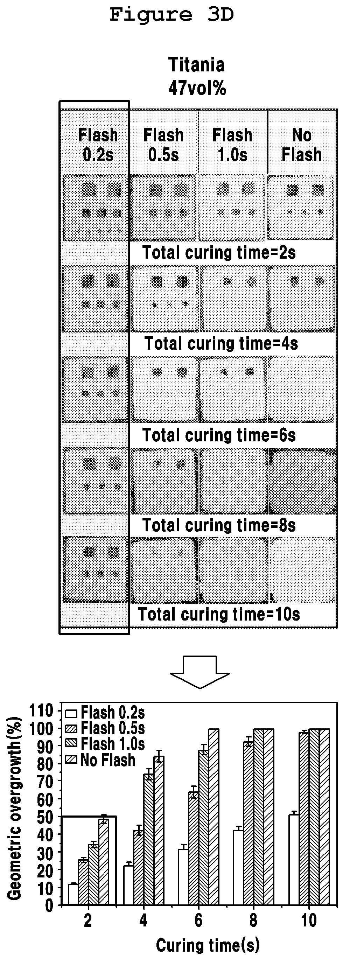

In order to confirm differences in structural accuracy of a titania ($TiO_2$) single printed layer depending on a flashing light irradiation manner and a continuous light irradiation manner, and differences in structural accuracy depending on flash time, process conditions for Examples 2-1 to 2-3, in which a single layer was formed using a flashing manner, and Comparative Example 2, in which a single printed layer was formed using a continuous light irradiation manner, are shown in Table 3, and images of the printed layers and geometric overgrowth rates thereof are shown in Figures 3A to 3D. Figures 3A to 3D are images and geometric overgrowth rates of titania single printed layers of Examples prepared using a flashing Photocuring manner with varying flash times and of Comparative Example prepared using a continuous photocuring manner, wherein the single printed layers were prepared using slurries for 3D printing comprising titania in an amount of 40, 43, 45, or 47 vol%, respectively.

[Table 3]

| | Slurry | Flash Time (s) | Off Time (s) | Total Curing Time (s) |
|---|---|---|---|---|
| Comparative Example 2 | Preparative Example 5-8 ($TiO_2$, 40, 43, 45, 47vol%) | No Flash | | 2, 4, 6, 8, 10 |
| Example 2-1 | | 0.2 | 0.5 | |
| Example 2-2 | | 0.5 | | |
| Example 2-3 | | 1.0 | | |

As shown in Figures 3A to 3D, similar to the zirconia ($ZrO_2$) single printed layer, overcuring in the titania ($TiO_2$) single printed layer was found to increase as the total curing time increased from 2 seconds to 10 seconds, and also increased as the titania particle content increased from 40 vol% to 47 vol%.

Further, when the titania content is low, i.e., 40 vol% and 43 vol%, in the case of using a flashing light irradiation manner (Flash), high structural accuracy was exhibited at a low flash time of 0.2 seconds, and even when the total curing time was increased to 8 seconds, high structural accuracy was maintained to the extent that all three types of square pores were visible. In contrast, in the case of a continuous light irradiation manner (No Flash), significant overcuring was observed even at a total curing time of 2 seconds, and it was confirmed that overcuring became more severe as the total curing time increased.

Further, when the titania content is high, i.e., 45 vol% and 47 vol%, in the case of using a flashing light irradiation manner (Flash), high structural accuracy was exhibited at a flash time of 0.2 seconds, and it was confirmed that, compared to the continuous light irradiation manner (No Flash), overcuring caused by scattering was significantly reduced as the flash time decreased.

Further, from the graph of geometric overgrowth rate according to the total curing time, it can be confirmed that, similar to the zirconia ($ZrO_2$) single printed layer, the overgrowth rate was reduced in the flashing light irradiation manner compared to the continuous light irradiation manner, and particularly, overcuring was effectively reduced at a flash time of 0.2 seconds.

Specifically, in the case of a slurry having a content of 40 vol%, the overgrowth rate was reduced to less than 10% at a total curing time of 6 seconds in the flashing light irradiation manner (Flash), whereas in the continuous light irradiation manner (No Flash), the overgrowth rate was as high as 70% or more at the same curing time.

Further, at a total curing time of 2 seconds and a flash time of 0.2 seconds, the overgrowth rate did not exceed 12% for all contents (40, 43, 45, and 47 vol%), and even at a total curing time of 2 seconds and a flash time of 0.5 seconds, the overgrowth rate was suppressed to less than 10% when slurries having contents of 40 vol% and 43 vol% were used.

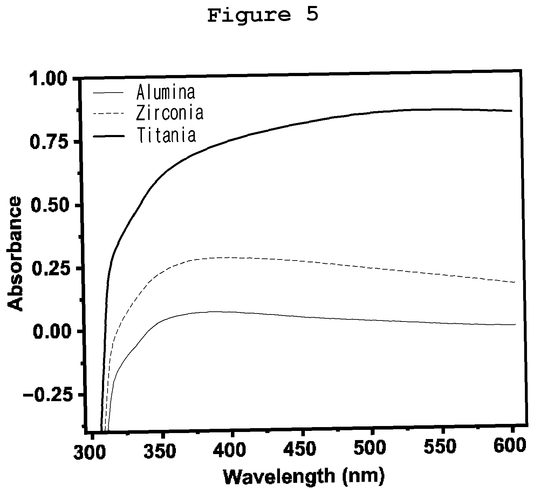

Referring to the graph of Figure 5 comparing light absorption rates of zirconia, titania, and alumina, it can be confirmed that titania exhibits a significantly higher UV absorbanve compared to zirconia and alumina. Accordingly, under

the same curing time, the amount of UV energy available for the photopolymerization reaction is relatively small, and due to the high refractive index, a longer time is required for curing, and more curing time is required to obtain a printable curing depth. Meanwhile, when more curing time is used to achieve a printable curing depth, there is a problem that overcuring due to scattering occurs. Therefore, a 3D printing method using flashing Photocuring can be very effectively used to reduce overcuring in titania slurries, particularly under long curing time conditions.

(3) Alumina ($Al_2O_3$) Single Printed Layer

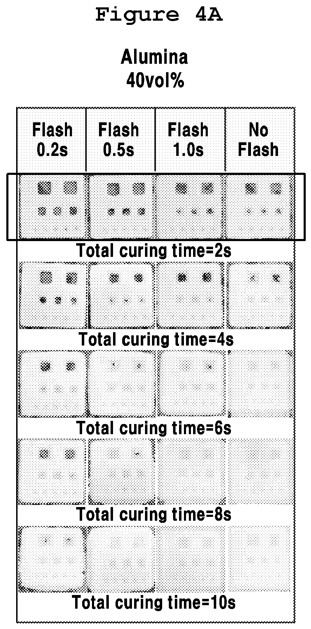

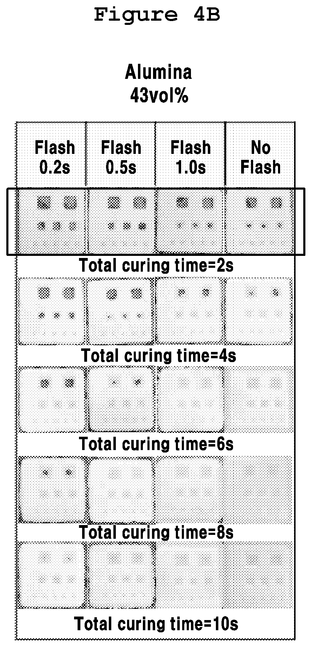

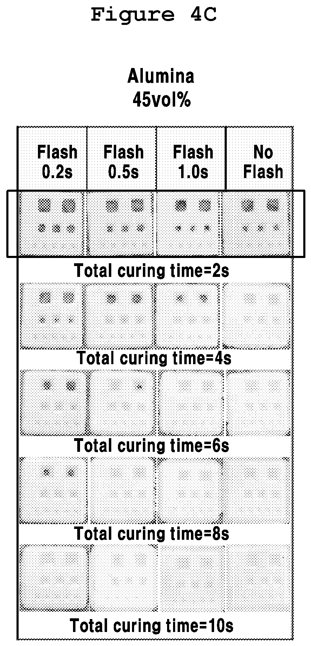

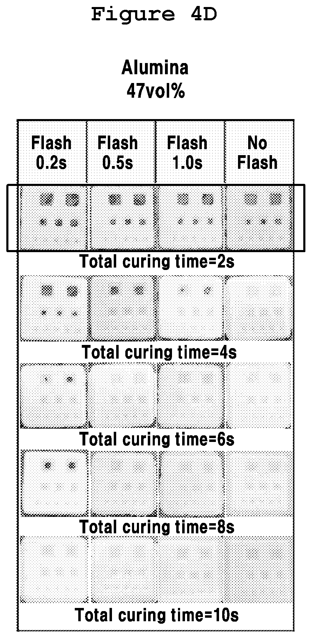

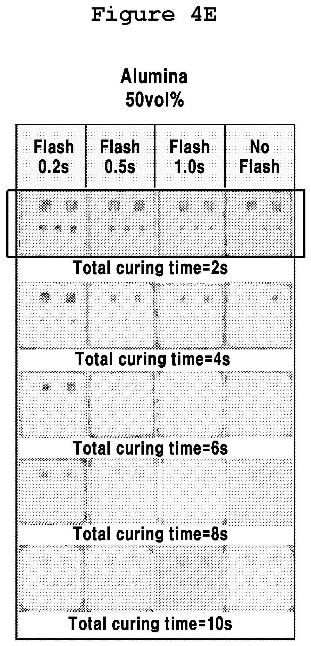

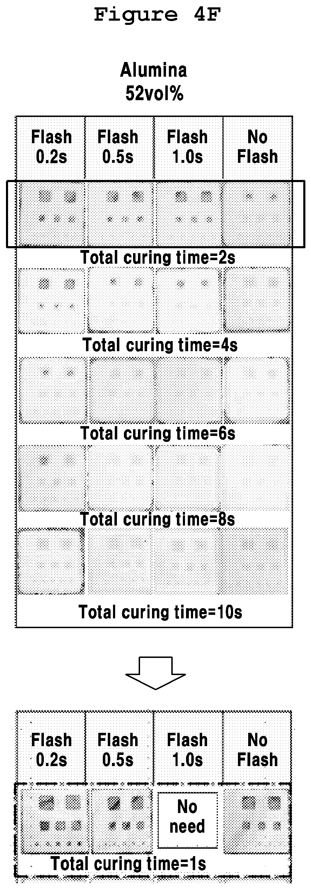

In order to confirm differences in structural accuracy of an alumina ($Al_2O_3$) single printed layer depending on a flashing light irradiation manner and a continuous light irradiation manner, and differences in structural accuracy depending on flash time, process conditions for Examples 3-1 to 3-3, in which a single layer was formed using a flashing manner, and Comparative Example 3, in which a single printed layer was formed using a continuous light irradiation manner, are shown in Table 4, and images of the printed layers are shown in Figures 4A to 4D. Figures 4A to 4E are images of alumina single printed layers of Examples prepared using a flashing Photocuring manner with varying flash times and of Comparative Example prepared using a continuous photocuring manner, wherein the single printed layers were prepared using slurries for 3D printing comprising 40, 43, 45, 47, 50, or 52 vol% of titania.

[Table 4]

| | Slurry | Flash Time (s) | Off Time (s) | Total Curing Time (s) |
|---|---|---|---|---|
| Comparative Example 3 | Preparative Example 9-14($Al_2O_3$, 40, 43, 45, 47, 50, 52vol%) | No Flash | | 1, 2, 4, 6, 8, 10 |
| Example 3-1 | | 0.2 | 0.5 | |
| Example 3-2 | | 0.5 | | |
| Example 3-3 | | 1.0 | | |

As shown in FIG. 5, alumina has relatively low UV absorbance compared to zirconia and titania, and thus has relatively high curing depth (i.e., curability). However, as shown in FIGS. 4A to 4E, when alumina content increases to 50 and 52 vol%, scattering increases, and in the continuous illumination method, severe overcuring occurs. In contrast, by using the flashing illumination method, overcuring can be effectively suppressed.

From these results, although alumina has lower refractive index and lower UV absorbance than zirconia and titania, and thus exhibits higher curability and lower scattering behavior, when particle content is increased to achieve high sintering density and mechanical properties, overcuring due to scattering significantly increases. As a result, a similar trend of increasing overcuring is observed as in zirconia and titania having higher refractive index and higher UV absorbance.

<Experimental Example 2> Evaluation of Structural Accuracy of Single Printed Layers According to Off-Time

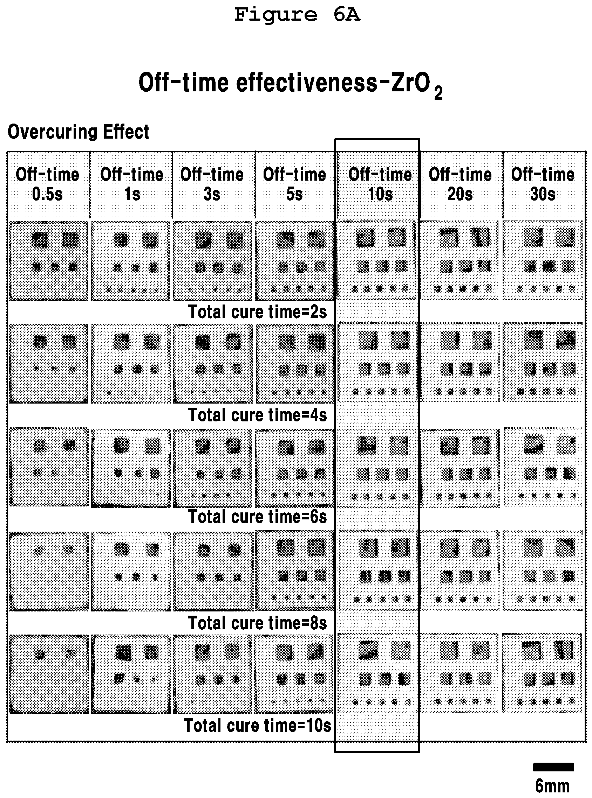

In order to confirm differences in structural accuracy according to off-time in a flashing light irradiation manner for zirconia ($ZrO_2$), titania ($TiO_2$), and alumina ($Al_2O_3$) single printed layers, process conditions for Examples 1-1 to 1-3 prepared with varying off-times are shown in Table 5, and images of the printed layers and geometric overgrowth rates thereof are shown in Figures 6A to 6C, Figures 7A to 7C, and Figures 8A to 8C.

[Table 5]

| | Slurry | Flash Time (s) | Off Time (s) | Total Curing Time (s) |
|---|---|---|---|---|
| Example 1-1 | Preparative Example 3 ($ZrO_2$, 45vol%) | 0.2 | 0.5 | 2, 4, 6, 8, 10 |
| Example 1-4 | | | 1 | |
| Example 1-5 | | | 3 | |
| Example 1-6 | | | 5 | |
| Example 1-7 | | | 10 | |
| Example 1-8 | | | 20 | |
| Example 1-9 | | | 30 | |

(continued)

| | Slurry | Flash Time (s) | Off Time (s) | Total Curing Time (s) |
|---|---|---|---|---|
| Example 2-1 | Preparative Example 7 ($TiO_2$, 45vol%) | 0.5 | 0.5 | 2, 4, 6, 8, 10 |
| Example 2-4 | | | 1 | |
| Example 2-5 | | | 3 | |
| Example 2-6 | | | 5 | |
| Example 2-7 | | | 10 | |
| Example 2-8 | | | 20 | |
| Example 2-9 | | | 30 | |
| Example 3-1 | Preparative Example 14 ($Al_2O_3$, 52vol%) | 0.2 | 0.5 | 1, 2, 4, 6, 8, 10 |
| Example 3-4 | | | 1 | |
| Example 3-5 | | | 3 | |
| Example 3-6 | | | 5 | |
| Example 3-7 | | | 10 | |
| Example 3-8 | | | 20 | |
| Example 3-9 | | | 30 | |

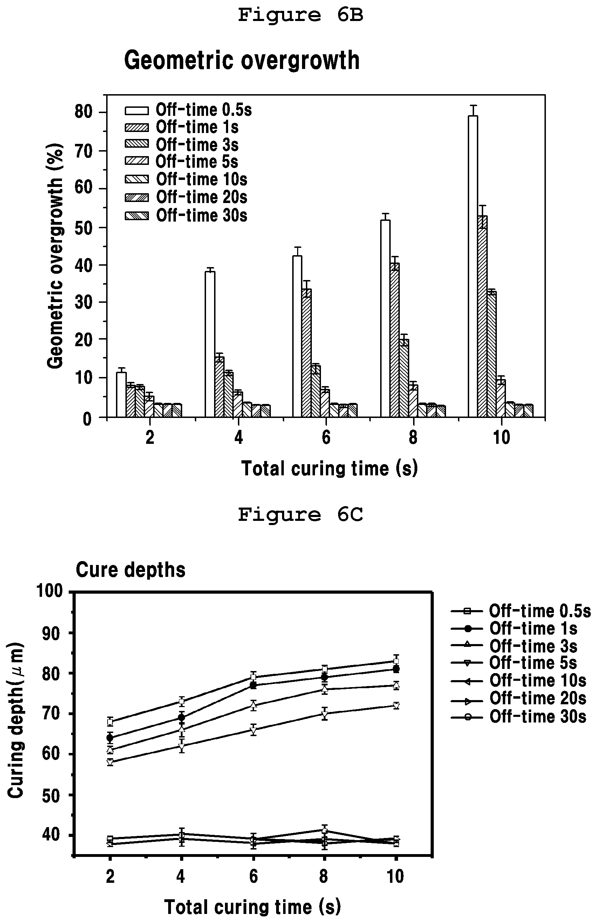

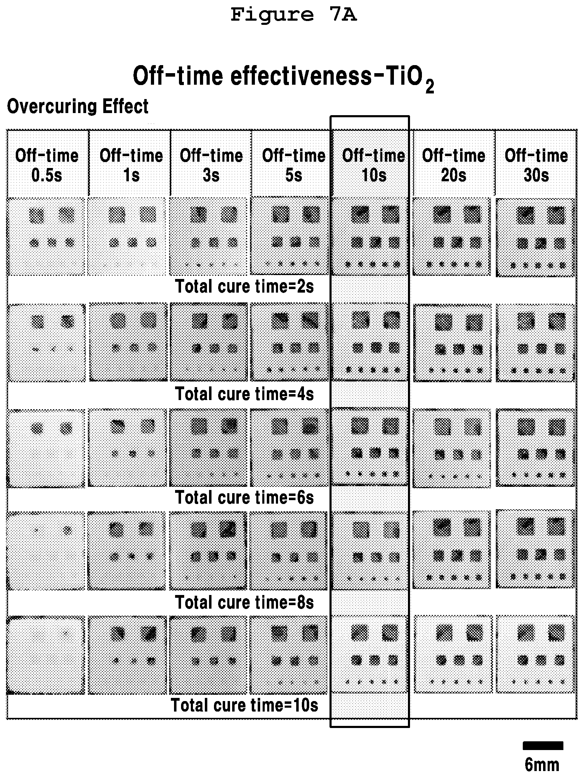

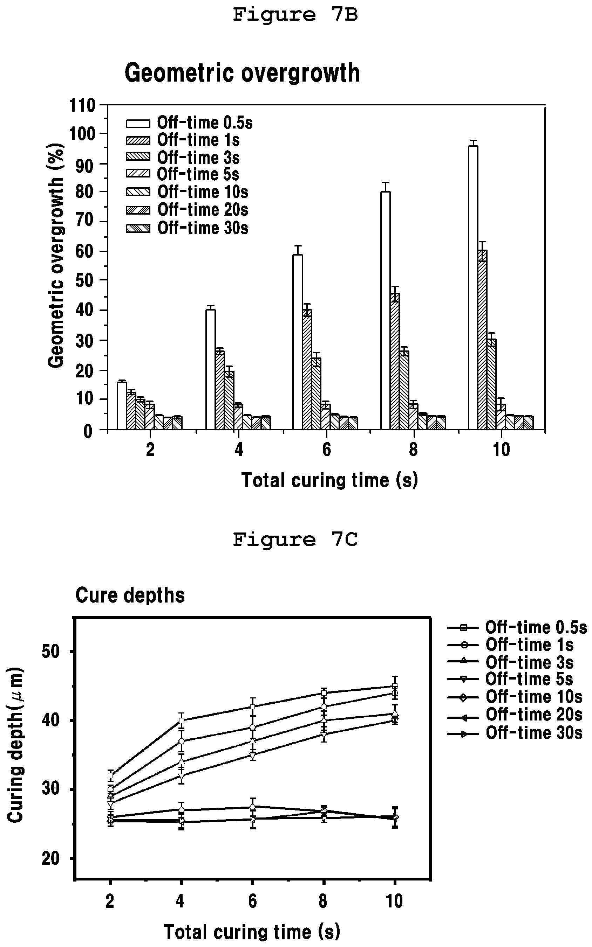

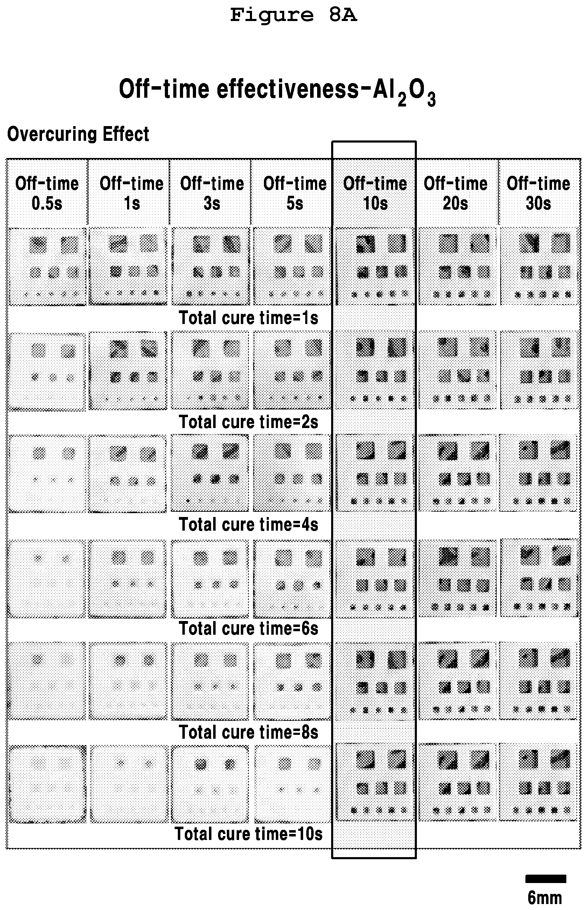

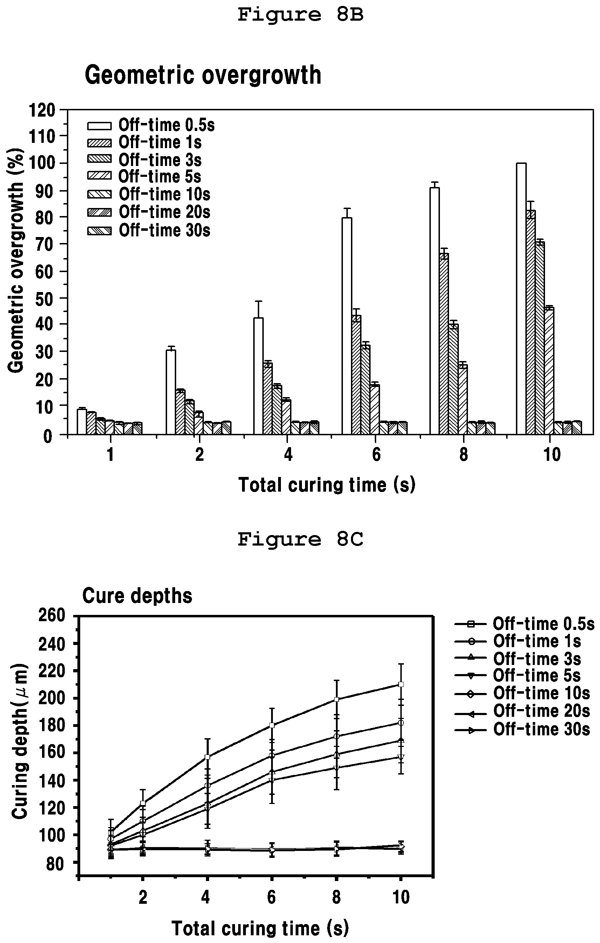

Figure 6A shows images of single printed layers of zirconia ($ZrO_2$) prepared with varying turning-off times (off-times) according to curing time, Figure 6B shows geometric overgrowth, and Figure 6C shows curing depth. Figure 7A shows images of single printed layers of titania ($TiO_2$) prepared with varying turning-off times (off-times) according to curing time, Figure 7B shows geometric overgrowth, and Figure 7C shows curing depth. Figure 8A shows images of single printed layers of alumina ($Al_2O_3$) prepared with varying turning-off times (off-times) according to curing time, Figure 8B shows geometric overgrowth, and Figure 8C shows curing depth.

Referring to Figures 6A, 7A, and 8A, it can be confirmed that, for all of zirconia ($ZrO_2$), titania ($TiO_2$), and alumina ($Al_2O_3$), structural accuracy increases as the turning-off time (off-time) increases, regardless of the total curing time, and the highest accuracy is exhibited at an turning-off time of 5 seconds or more.

Further, referring to Figures 6B, 7B, and 8B, when examining the graphs of geometric overgrowth rate according to total curing time, it can be confirmed that the geometric overgrowth rate decreases as the turning-off time increases. In particular, when the total curing time is set to 2 seconds, comparing an turning-off time (off-time) of 0.5 seconds with an turning-off time of 5 seconds, the overgrowth rate decreases from 11% to less than 5% for zirconia ($ZrO_2$), from 15% to 8% for titania ($TiO_2$), and from about 9% to less than 5% for alumina ($Al_2O_3$).

Further, when the total curing time is set to 10 seconds and the turning-off time is 0.5 seconds, the overgrowth rate is nearly 80% for zirconia ($ZrO_2$), exceeds about 95% for titania ($TiO_2$), and is about 100% for alumina ($Al_2O_3$). However, when the turning-off time is increased to 1 second, 3 seconds, 5 seconds, and 10 seconds, the overgrowth rate decreases to 50%, 32%, 10%, and less than 5% for zirconia ($ZrO_2$), to 60%, 30%, 10%, and less than 5% for titania ($TiO_2$), and to about 80%, 70%, 45%, and less than 5% for alumina ($Al_2O_3$), respectively. It is also confirmed that, at 10 seconds or more, the reduction is no longer significant or the decrease rate becomes negligible.

From the above results, it can be confirmed that overcuring can be effectively suppressed by setting the turning-off time (off-time) to 0.5 seconds to 10 seconds, preferably 1 second to 10 seconds, more preferably 3 seconds to 10 seconds, and still more preferably 5 seconds to 10 seconds, thereby forming a high-resolution 3D printed structure by suppressing overcuring. In particular, it is confirmed that the effect of suppressing overcuring according to turning-off time is very effective when the total curing time is large.

Meanwhile, referring to Figures 6C, 7C, and 8C, when examining curing depth according to curing time, it can be confirmed that when the turning-off time is set to 10 seconds or more, i.e., 10 seconds to 30 seconds, the curing depth does not increase even if the total curing time is increased. Accordingly, when the turning-off time is increased to 10 seconds or more, there may be a problem in that the required curing depth cannot be achieved.

From the above results, it is more preferable to set the turning-off time (off-time) to less than 10 seconds in order to suppress overcuring and form a high-resolution 3D printed structure while obtaining a curing depth suitable for 3D printing.

<Experimental Example 3> Evaluation of Structural Accuracy of Ceramic Structures

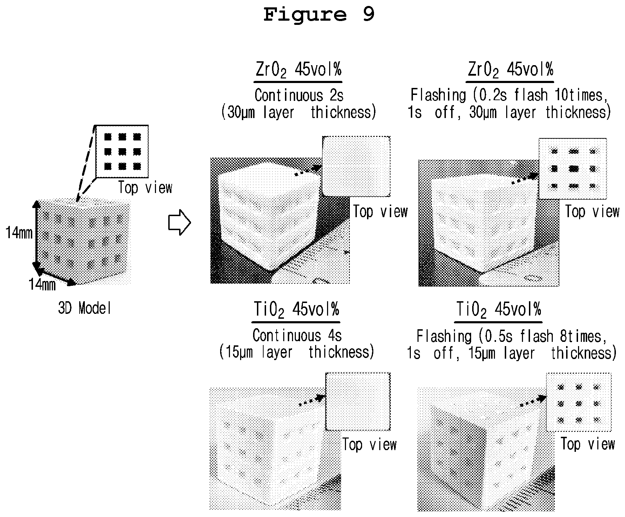

In order to compare structural accuracy of ceramic structures of zirconia ($ZrO_2$), titania ($TiO_2$), and alumina ($Al_2O_3$) prepared using a continuous photocuring manner and a flashing Photocuring manner, process conditions for ceramic structures of Comparative Examples 4-1 to 4-3 prepared using the continuous photocuring manner and Examples 4-1 to 4-3 prepared using the flashing Photocuring manner are shown in Table 6, and images of the printed layers are shown in Figures 9 to 13 and Figures 14A and 14B.

[Table 6]

<table>
<tr><th></th><th>Slurry</th><th>Flash Time (s)</th><th>Off Time (s)</th><th>Curing Time (s)</th><th>Layer Thickness (μm)</th><th>Debinding</th><th>Sintering</th></tr>
<tr><td>Example 4-1</td><td>Preparative Example 3 ($ZrO_2$ 45vol%)</td><td>0.2</td><td>1</td><td>2</td><td>25</td><td rowspan="6">600 °C/ $N_2$</td><td>1500 °C/ air</td></tr>
<tr><td>Example 4-2</td><td>Preparative Example 7 ($TiO_2$ 45vol%)</td><td>0.5</td><td>1</td><td>4</td><td>15</td><td>1200 °C/ air</td></tr>
<tr><td>Example 4-3</td><td>Preparative Example 11 ($Al_2O_3$ 52vol%)</td><td>0.2</td><td>1</td><td>1</td><td>40</td><td>1600°C/ air</td></tr>
<tr><td>Comparative Example 4-1</td><td>Preparative Example 3 ($ZrO_2$ 45vol%)</td><td rowspan="3" colspan="2">No Flash</td><td>2</td><td>25</td><td>1500 °C/ air</td></tr>
<tr><td>Comparative Example 4-2</td><td>Preparative Example 7 ($TiO_2$ 45vol%)</td><td>4</td><td>15</td><td>1200 °C/ air</td></tr>
<tr><td>Comparative Example 4-3</td><td>Preparative Example 11 ($Al_2O_3$ 52vol%)</td><td>1</td><td>40</td><td>1600 °C/ air</td></tr>
</table>

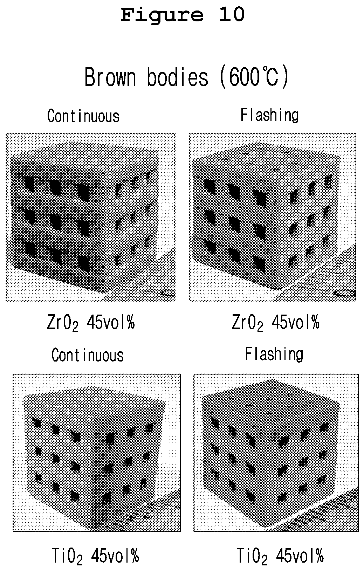

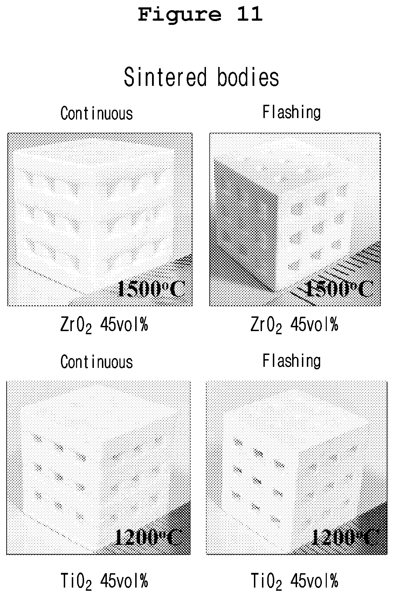

Figure 9 shows images of 3D printed structures (green bodies) of zirconia ($ZrO_2$) and titania ($TiO_2$) prepared using a continuous photocuring manner and a flashing Photocuring manner, Figure 10 shows images of debound structures (brown bodies) obtained by debinding the 3D printed structures, and Figure 11 shows images of sintered structures (sintered bodies) obtained by sintering the debound structures.

As shown in Figure 9, in the case of zirconia ($ZrO_2$) and titania ($TiO_2$), the 3D printed structures (green bodies) prepared using the continuous photocuring manner exhibited excessive overcuring, such that square pores on the upper surface of the lattice were not visible. That is, it can be confirmed that the structural accuracy of the 3D printed structures after printing was very low.

In contrast, under the same process conditions, in the case of the 3D printed structures (green bodies) prepared using the flashing Photocuring manner, overcuring caused by scattering was significantly reduced, such that the structures were formed similarly to the square 3D model on the lattice surface. That is, it can be confirmed that the structural accuracy of the 3D printed structures after printing was very high.

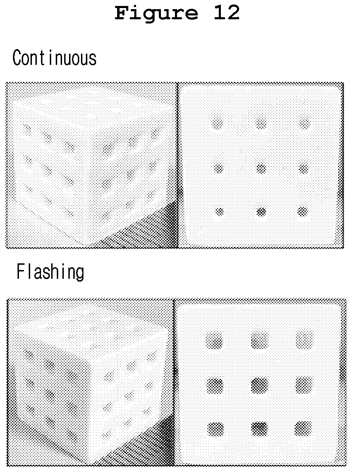

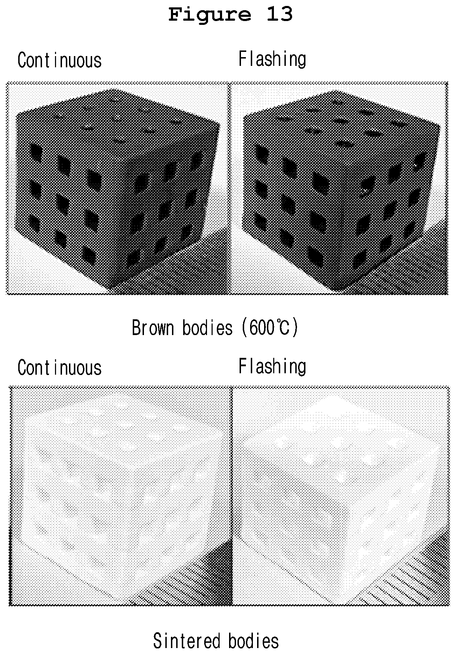

Further, it can be confirmed from Figures 12 and 13 that such differences in accuracy also occur in ceramic structures obtained after completing the debinding and sintering processes.

Figure 12 shows images of 3D printed structures (green bodies) of alumina ($Al_2O_3$) prepared using a continuous photocuring manner and a flashing Photocuring manner, and Figure 13 shows images of debound structures (brown bodies) and sintered structures (sintered bodies).

As shown in Figures 12 and 13, even in the case of using alumina ($Al_2O_3$), it can be confirmed that structural accuracy of the 3D printed structures is improved when prepared using the flashing Photocuring manner compared to the continuous photocuring manner, and such improvement is also observed in ceramic structures obtained after completing the debinding and sintering processes.

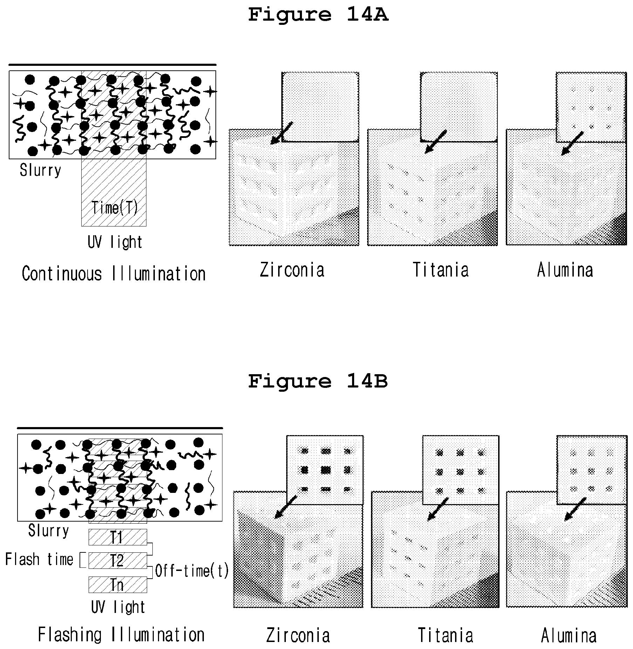

Figure 14A shows sintered structures of zirconia, titania, and alumina prepared according to Comparative Examples, and Figure 14B shows sintered structures of zirconia, titania, and alumina prepared according to Examples. As shown in Figures 14A and 14B, it can be confirmed that structural accuracy is significantly improved in all of zirconia, titania, and alumina by using the flashing Photocuring manner. Accordingly, it can be confirmed that, in manufacturing ceramic structures using a photocuring manner, structural accuracy of the ceramic structures can be significantly improved by employing the flashing Photocuring manner.

<Experimental Example 4> Evaluation of Physical Properties

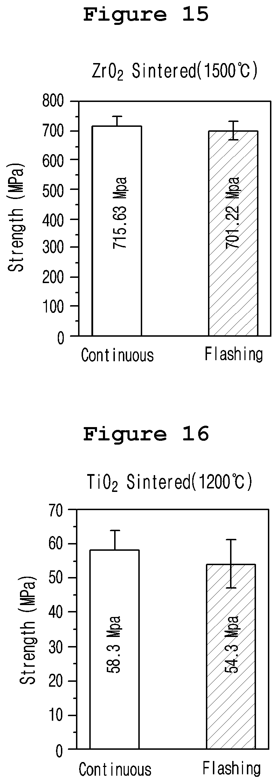

In order to compare mechanical properties and density of ceramic structures of zirconia ($ZrO_2$) and titania ($TiO_2$) prepared using a continuous photocuring manner and a flashing Photocuring manner, flexural strength was measured using a universal testing machine (RB-305 MICROLOAD, R&B, Korea), and sintered density was measured using the Archimedes method (XPE205, Mettler Toledo, Switzerland) for ceramic structures of Comparative Examples 4-1 to 4-2 prepared using the continuous photocuring manner and Examples 4-1 to 4-2 prepared using the flashing Photocuring manner, and the results are shown in Table 7 and Figures 15 and 16.

[Table 7]

| | | Density |
|---|---|---|
| $ZrO_2$ | Comparative Example 4-1 (continuous photocuring) | 99.05% |
| | Example 4-1 (flashing Photocuring) | 98.98% |
| $TiO_2$ | Comparative Example 4-2 (continuous photocuring) | 98.75% |
| | Example 4-2 (flashing Photocuring) | 98.72% |

As shown in Table 7 and Figures 15 and 16, it can be confirmed that the final sintered structures prepared using the flashing Photocuring manner exhibit density and mechanical properties comparable to those of sintered structures prepared using the continuous photocuring manner. Accordingly, it can be confirmed that the 3D printing method according to Examples enables fabrication of 3D printed structures and ceramic structures with high structural accuracy without deteriorating material properties.

**Claims**

**1.** A 3D printing method using flashing photocuring, comprising:

supplying a slurry for 3D printing comprising a photocurable resin and inorganic particles onto a plate of a 3D apparatus;
photocuring the slurry onto the slurry supplied on the plate by irradiating light; and
forming a 3D printed structure by repeatedly performing the supplying step and the photocuring step,
wherein, in the photocuring step, light is irradiated in a flashing manner by repeatedly turning the light on and off.

**2.** The 3D printing method according to claim 1,
wherein, in the photocuring step, light is irradiated in a flashing manner by repeatedly turning the light on for 0.1 to 1 second and turning the light off for 0.5 seconds or more.

**3.** The 3D printing method according to claim 2,
wherein, in the photocuring step, a turning-off time is 1 second or more.

**4.** The 3D printing method according to claim 3,
wherein, in the photocuring step, a turning-on time is 0.1 to 0.5 seconds.

**5.** The 3D printing method according to claim 1,
wherein a total curing time in the photocuring step is 1 second to 60 seconds.

**6.** The 3D printing method according to claim 1,
wherein a curing depth in the photocuring step is 10 $\mu$m or more.

**7.** The 3D printing method according to claim 1,
wherein the slurry for 3D printing comprises the inorganic particles in an amount of 30 vol% or more.

**8.** The 3D printing method according to claim 1,
wherein the slurry for 3D printing further comprises a photo-initiator and a dispersant.

**9.** The 3D printing method according to claim 1, wherein the inorganic particles are at least one of ceramic particles and metal particles.

**10.** The 3D printing method according to claim 1, further comprising:

debinding the 3D printed structure; and
sintering the debound structure.

**11.** The 3D printing method according to claim 1, wherein the slurry for 3D printing comprises particles of at least one of zirconia ($ZrO_2$) and titania ($TiO_2$) in an amount of 40 to 50 vol%.

**12.** The 3D printing method according to claim 1, wherein the slurry for 3D printing comprises alumina ($Al_2O_3$) particles in an amount of 50 to 60 vol%.

# Figure 1A

1
2
3
3mm x 3mm
2mm x 2mm
1mm x 1mm
STL file
Sliced model
DLP printing

# Figure 1B

Ceramic slurry
Doctor blade
Building plate
Transparent film
UV engine

# Figure 1C

6mm

# Figure 2A

Zirconia
40vol%
Flash 0.2s
Flash 0.5s
Flash 1.0s
No Flash
Total curing time=2s
Total curing time=4s
Total curing time=6s
Total curing time=8s
Total curing time=10s

Flash 0.2s
Flash 0.5s
Flash 1.0s
No Flash
Geometric overgrowth(%)
110
100
90
80
70
60
50
40
30
20
10
0
2
4
6
8
10
Curing time(s)

# Figure 2B

Zirconia
43vol%
Flash 0.2s
Flash 0.5s
Flash 1.0s
No Flash
Total curing time=2s
Total curing time=4s
Total curing time=6s
Total curing time=8s
Total curing time=10s

Flash 0.2s
Flash 0.5s
Flash 1.0s
No Flash
Geometric overgrowth(%)
0
10
20
30
40
50
60
70
80
90
100
110
2
4
6
8
10
Curing time(s)

# Figure 2C

Zirconia
45vol%

Flash 0.2s
Flash 0.5s
Flash 1.0s
No Flash

Total curing time=2s

Total curing time=4s

Total curing time=6s

Total curing time=8s

Total curing time=10s

Flash 0.2s
Flash 0.5s
Flash 1.0s
No Flash
Geometric overgrowth(%)
0
10
20
30
40
50
60
70
80
90
100
110
2
4
6
8
10
Curing time(s)

# Figure 2D

Zirconia
47vol%
Flash 0.2s
Flash 0.5s
Flash 1.0s
No Flash
Total curing time=2s
Total curing time=4s
Total curing time=6s
Total curing time=8s
Total curing time=10s

Flash 0.2s
Flash 0.5s
Flash 1.0s
No Flash
Geometric overgrowth(%)
0
10
20
30
40
50
60
70
80
90
100
110
2
4
6
8
10
Curing time(s)

# Figure 3A

Titania
40vol%

Flash 0.2s | Flash 0.5s | Flash 1.0s | No Flash

Total curing time=2s

Total curing time=4s

Total curing time=6s

Total curing time=8s

Total curing time=10s

Flash 0.2s
Flash 0.5s
Flash 1.0s
No Flash
Geometric overgrowth(%)
0
10
20
30
40
50
60
70
80
90
100
110
2
4
6
8
10
Curing time(s)

Figure 3B

Titania
43vol%
Flash 0.2s
Flash 0.5s
Flash 1.0s
No Flash
Total curing time=2s
Total curing time=4s
Total curing time=6s
Total curing time=8s
Total curing time=10s

Flash 0.2s
Flash 0.5s
Flash 1.0s
No Flash
Geometric overgrowth(%)
0
10
20
30
40
50
60
70
80
90
100
110
2
4
6
8
10
Curing time(s)

# Figure 3C

Titania
45vol%
Flash 0.2s
Flash 0.5s
Flash 1.0s
No Flash
Total curing time=2s
Total curing time=4s
Total curing time=6s
Total curing time=8s
Total curing time=10s

Flash 0.2s
Flash 0.5s
Flash 1.0s
No Flash
Geometric overgrowth(%)
0
10
20
30
40
50
60
70
80
90
100
110
2
4
6
8
10
Curing time(s)

# Figure 3D

Titania
47vol%
Flash 0.2s
Flash 0.5s
Flash 1.0s
No Flash
Total curing time=2s
Total curing time=4s
Total curing time=6s
Total curing time=8s
Total curing time=10s

Flash 0.2s
Flash 0.5s
Flash 1.0s
No Flash
Geometric overgrowth(%)
0
10
20
30
40
50
60
70
80
90
100
110
2
4
6
8
10
Curing time(s)

Figure 4A

Alumina
40vol%
Flash
0.2s
Flash
0.5s
Flash
1.0s
No
Flash
Total curing time=2s
Total curing time=4s
Total curing time=6s
Total curing time=8s
Total curing time=10s

Figure 4B

Alumina
43vol%
Flash 0.2s
Flash 0.5s
Flash 1.0s
No Flash
Total curing time=2s
Total curing time=4s
Total curing time=6s
Total curing time=8s
Total curing time=10s

Figure 4C

Alumina
45vol%
Flash 0.2s
Flash 0.5s
Flash 1.0s
No Flash
Total curing time=2s
Total curing time=4s
Total curing time=6s
Total curing time=8s
Total curing time=10s

Figure 4D

Alumina
47vol%
Flash
0.2s
Flash
0.5s
Flash
1.0s
No
Flash
Total curing time=2s
Total curing time=4s
Total curing time=6s
Total curing time=8s
Total curing time=10s

Figure 4E

Alumina
50vol%
Flash 0.2s
Flash 0.5s
Flash 1.0s
No Flash
Total curing time=2s
Total curing time=4s
Total curing time=6s
Total curing time=8s
Total curing time=10s

# Figure 4F

Alumina
52vol%
Flash 0.2s
Flash 0.5s
Flash 1.0s
No Flash
Total curing time=2s
Total curing time=4s
Total curing time=6s
Total curing time=8s
Total curing time=10s

Flash 0.2s
Flash 0.5s
Flash 1.0s
No Flash
No need
Total curing time=1s

Figure 5

1.00
0.75
0.50
0.25
0.00
−0.25
Absorbance
Alumina
Zirconia
Titania
300
350
400
450
500
550
600
Wavelength (nm)

Figure 6A

Off-time effectiveness-$ZrO_2$

Overcuring Effect

| Off-time 0.5s | Off-time 1s | Off-time 3s | Off-time 5s | Off-time 10s | Off-time 20s | Off-time 30s |
|---|---|---|---|---|---|---|

Total cure time=2s

Total cure time=4s

Total cure time=6s

Total cure time=8s

Total cure time=10s

6mm

Figure 6B

Geometric overgrowth
Geometric overgrowth (%)
Total curing time (s)
Off-time 0.5s
Off-time 1s
Off-time 3s
Off-time 5s
Off-time 10s
Off-time 20s
Off-time 30s
0
10
20
30
40
50
60
70
80
2
4
6
8
10

Figure 6C

Cure depths
Curing depth(μm)
Total curing time (s)
Off-time 0.5s
Off-time 1s
Off-time 3s
Off-time 5s
Off-time 10s
Off-time 20s
Off-time 30s
40
50
60
70
80
90
100
2
4
6
8
10

Figure 7A

Off-time effectiveness-$TiO_2$

Overcuring Effect

| Off-time 0.5s | Off-time 1s | Off-time 3s | Off-time 5s | Off-time 10s | Off-time 20s | Off-time 30s |
|---|---|---|---|---|---|---|

Total cure time=2s

Total cure time=4s

Total cure time=6s

Total cure time=8s

Total cure time=10s

6mm

Figure 7B

Geometric overgrowth
Geometric overgrowth (%)
Total curing time (s)
Off-time 0.5s
Off-time 1s
Off-time 3s
Off-time 5s
Off-time 10s
Off-time 20s
Off-time 30s
0
10
20
30
40
50
60
70
80
90
100
110
2
4
6
8
10

Figure 7C

Cure depths
Curing depth(μm)
Total curing time (s)
Off-time 0.5s
Off-time 1s
Off-time 3s
Off-time 5s
Off-time 10s
Off-time 20s
Off-time 30s
20
30
40
50
2
4
6
8
10

Figure 8A

Off-time effectiveness-$Al_2O_3$

Overcuring Effect

Off-time 0.5s
Off-time 1s
Off-time 3s
Off-time 5s
Off-time 10s
Off-time 20s
Off-time 30s

Total cure time=1s

Total cure time=2s

Total cure time=4s

Total cure time=6s

Total cure time=8s

Total cure time=10s

6mm

Figure 8B

Geometric overgrowth
Off-time 0.5s
Off-time 1s
Off-time 3s
Off-time 5s
Off-time 10s
Off-time 20s
Off-time 30s
Geometric overgrowth (%)
0
10
20
30
40
50
60
70
80
90
100
110
120
1
2
4
6
8
10
Total curing time (s)

Figure 8C

Cure depths
Off-time 0.5s
Off-time 1s
Off-time 3s
Off-time 5s
Off-time 10s
Off-time 20s
Off-time 30s
Curing depth(μm)
80
100
120
140
160
180
200
220
240
260
2
4
6
8
10
Total curing time (s)

# Figure 9

$ZrO_2$ 45vol%
Continuous 2s
(30μm layer thickness)
$ZrO_2$ 45vol%
Flashing (0.2s flash 10times,
1s off, 30μm layer thickness)
Top view
14mm
14mm
3D Model
Top view
Top view
$TiO_2$ 45vol%
Continuous 4s
(15μm layer thickness)
$TiO_2$ 45vol%
Flashing (0.5s flash 8times,
1s off, 15μm layer thickness)
Top view
Top view

# Figure 10

Brown bodies (600℃)

Continuous

Flashing

$ZrO_2$ 45vol%

$ZrO_2$ 45vol%

Continuous

Flashing

$TiO_2$ 45vol%

$TiO_2$ 45vol%

# Figure 11

Sintered bodies
Continuous
Flashing
1500°C
1500°C
ZrO2 45vol%
ZrO2 45vol%
Continuous
Flashing
1200°C
1200°C
TiO2 45vol%
TiO2 45vol%

# Figure 12

Continuous

Flashing

# Figure 13

Continuous
Flashing

Brown bodies (600℃)

Continuous Flashing

Sintered bodies

## Figure 14A

Slurry
Time(T)
UV light
Continuous Illumination
Zirconia
Titania
Alumina

## Figure 14B

Slurry
T1
Flash time
T2
Off-time(t)
Tn
UV light
Flashing Illumination
Zirconia
Titania
Alumina

**Figure 15**

$ZrO_2$ Sintered(1500℃)

800
700
600
500
400
300
200
100
0
Strength (MPa)
715.63 Mpa
701.22 Mpa
Continuous
Flashing

**Figure 16**

TiO2 Sintered(1200℃)
70
60
50
40
30
20
10
0
Strength (MPa)
58.3 Mpa
54.3 Mpa
Continuous
Flashing

## INTERNATIONAL SEARCH REPORT

International application No. **PCT/KR2024/015738**

**A. CLASSIFICATION OF SUBJECT MATTER**

**B29C 64/165**(2017.01)i; **B29C 64/264**(2017.01)i; **B33Y 10/00**(2015.01)i; **B33Y 30/00**(2015.01)i; **B33Y 70/10**(2020.01)i

According to International Patent Classification (IPC) or to both national classification and IPC

**B. FIELDS SEARCHED**

Minimum documentation searched (classification system followed by classification symbols)

B29C 64/165(2017.01); B22F 3/16(2006.01); B29C 67/00(2006.01); B33Y 40/00(2015.01); B33Y 70/00(2015.01); C08K 3/013(2018.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 광경화 (photopolymer), 프린팅 (printing), 슬러리 (slurry), 수지 (polymer), 점멸 (blink)

**C. DOCUMENTS CONSIDERED TO BE RELEVANT**

| Category* | Citation of document, with indication, where appropriate, of the relevant passages | Relevant to claim No. |
|---|---|---|
| Y | KR 10-2020-0034014 A (M.O.P CO., LTD.) 31 March 2020 (2020-03-31)<br>See claims 2 and 14-20; and figure 5. | 1-12 |
| Y | KR 10-2020-0044204 A (CLECELL CO., LTD.) 29 April 2020 (2020-04-29)<br>See claim 3. | 1-12 |
| Y | KR 10-2146039 B1 (KOREA INSTITUTE OF CERAMIC ENGINEERING AND TECHNOLOGY) 20 August 2020 (2020-08-20)<br>See claims 1 and 6. | 8,11-12 |
| A | KR 10-1809194 B1 (CARIMA CO., LTD.) 14 December 2017 (2017-12-14)<br>See paragraphs [0017]-[0018]. | 1-12 |
| A | JP 2015-205485 A (SEIKO EPSON CORP.) 19 November 2015 (2015-11-19)<br>See paragraphs [0007]-[0019]. | 1-12 |

☐ Further documents are listed in the continuation of Box C.  ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **20 January 2025** | **20 January 2025** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.
**PCT/KR2024/015738**

| Patent document cited in search report | Publication date (day/month/year) | Patent family member(s) | Publication date (day/month/year) |
|---|---|---|---|
| KR 10-2020-0034014 A | 31 March 2020 | KR 10-2131402 B1 | 08 July 2020 |
| KR 10-2020-0044204 A | 29 April 2020 | JP 2020-059266 A | 16 April 2020 |
| | | JP 6660510 B1 | 11 March 2020 |
| | | KR 10-2135311 B1 | 17 July 2020 |
| | | US 11370169 B2 | 28 June 2022 |
| | | US 2021-0031450 A1 | 04 February 2021 |
| | | WO 2021-020668 A1 | 04 February 2021 |
| KR 10-2146039 B1 | 20 August 2020 | None | |
| KR 10-1809194 B1 | 14 December 2017 | KR 10-2017-0063247 A | 08 June 2017 |
| | | WO 2017-095125 A1 | 08 June 2017 |
| JP 2015-205485 A | 19 November 2015 | JP 6519100 B2 | 29 May 2019 |
| | | US 10183332 B2 | 22 January 2019 |
| | | US 10780500 B2 | 22 September 2020 |
| | | US 2016-0325356 A1 | 10 November 2016 |
| | | US 2019-0111487 A1 | 18 April 2019 |
| | | WO 2015-162905 A1 | 29 October 2015 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **YUN, Y. et al.** Mechanism of ceramic slurry light scattering affecting contour accuracy and method of projection plane correction. *Ceramics International*, 2023, vol. 49 (10), 15024-15033
- **SUTEJO, I.A et al.** Fabrication of color-graded feldspathic dental prosthetics for aesthetic and restorative dentistry. *Dental Materials*, 2023, vol. 39 (6), 568-576